Europäisches Patentamt

**European Patent Office**

Office européen des brevets

(11) Numéro de publication: **0 017 567**
**B1**

(12) **FASCICULE DE BREVET EUROPEEN**

(45) Date de publication du fascicule du brevet: **11.01.84**

(51) Int. Cl.³: **F 01 D 5/30**

(21) Numéro de dépôt: **80400412.5**

(22) Date de dépôt: **28.03.80**

(54) Dispositif de fixation d'aubes sur un rotor de compresseur pour turboréacteur.

(30) Priorité: **04.04.79 FR 7908487**

(43) Date de publication de la demande:
**15.10.80 Bulletin 80/21**

(45) Mention de la délivrance du brevet:
**11.01.84 Bulletin 84/2**

(84) Etats contractants désignés:
**DE FR GB IT SE**

(56) Documents cités:
**FR - A - 919 171
FR - A - 1 214 497
FR - A - 2 177 318
FR - A - 2 311 946
FR - A - 2 347 858
GB - A - 1 272 200
US - A - 2 819 869
US - A - 3 063 674**

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Bouiller, Jean Georges**
**10, rue Kleber**
**F-91800 Brunoy (FR)**
Inventeur: **Joubert, Raymond Jean Maurice**
**1, allée Gustave Courbet Domaine de Grand Vau**
**F-91600 Savigny-sur-Orge (FR)**

(74) Mandataire: **Moinat, François et al,**
**S.N.E.C.M.A. Service des Brevets Boîte Postale 81**
**F-91003 Evry Cedex (FR)**

Dispositif de fixation d'aubes sur un rotor de compresseur pour turboréacteur

La présente invention a pour objet un dispositif de fixation d'aubes sur un rotor de compresseur pour turboréacteur.

Il est connu de réaliser des rotors de compresseur qui comportent des anneaux de renforcement remplis par des fibres bobinées noyées dans une matrice. Toutefois, dans de tels rotors, la fixation des aubes peut présenter certains problèmes de montage et de résistance aux efforts centrifuges exercés par les aubes et transmis à la jante.

Il est connu par le brevet FR—A—2 311 946 de réaliser un rotor de compresseur comprenant un tambour annulaire monobloc percé suivant son épaisseur d'une pluralité d'ouvertures destinées au passage des aubes. Dans cette réalisation chaque aube est introduite par l'intérieur dans le canal d'écoulement jusqu'à venir buter par son pied contre un épaulement de ladite ouverture. Une armature annulaire de maintien assure le verrouillage des aubes à l'encontre d'un déplacement vers l'intérieur du tambour.

On connaît, d'autre part, notamment par le brevet FR—A—919 171 et le brevet US—A—4 084 922, l'emploi de clavettes engagées entre les pieds de deux aubes pour les fixer à un disque de rotor. Dans ces dispositions connues cet emploi répond à la nécessité de fixer des aubes d'une nature particulière, telle que aubes creuses en tôle dont le parois minces sont glissées dans des fentes pratiquées dans la masse d'une jante métallique ou bien aubes en matériau céramique ne permettant pas une distribution uniforme des charges et les clavettes sont alors montées à l'intérieur de logements pratiqués dans la masse de la jante métallique du disque.

Un tambour réalisé en matière composite se prête assez mal à la fixation par encastrement soit des pieds d'aubes soit de clavettes dans des logements de type classique.

D'autre part, lorsqu'il s'agit d'une aube de soufflante, la taille de l'aube, et surtout la présence de nageoires ou d'un talon de tête, interdisent toute insertion par l'extérieur d'un tambour.

La présente invention a pour but de remédier à ces inconvénients et de permettre le montage des aubes qui sont engagées par l'extérieur dans des alvéoles pratiquées dans le rotor, le pied de l'aube faisant saillie à l'intérieur de l'alésage.

Conformément à l'invention, les aubes présentent des plateformes successives par lesquelles elles sont en appui sur la paroi des alvéoles, lesdites aubes étant verrouillées radialement sur le tambour par une clavette engagée entre les pieds de deux aubes adjacentes et en appui contre la face intérieure constituée par l'alésage du tambour.

Suivant un mode de réalisation, la partie centrale de la jante du rotor est constituée de plusieurs couches de fibres.

Les clavettes jouent le rôle de olé de voûte et sont insérées entre le pied des aubes afin d'assurer leur verrouillage radial dans le sens centripète et centrifuge.

Par ailleurs, les efforts centrifuges exercés par les aubes sont transmis à la jante par les clavettes.

Suivant un autre mode de réalisation, la partie centrale de la jante du rotor est métallique.

Cette disposition présente un meilleur appui des plateformes des aubes sur des surfaces métalliques qui participent à la reprise des efforts affectant les aubes.

D'autres caractéristiques et avantages de l'invention ressortiront plus clairement de la description qui va suivre et en se reportant aux dessins annexés sur lesquels:

la figure 1 est une vue synoptique d'un mode de réalisation du dispositif de fixation d'aubes sur un rotor suivant l'invention;

la figure 2 est une vue en coupe axiale du dispositif de fixation représenté à la figure 1;

la figure 3 est une vue en coupe transversale suivant la ligne III—III de la figure 2;

la figure 4 est une vue en coupe axiale d'une variante de réalisation du dispositif de fixation d'aubes sur un rotor;

la figure 5 est une vue en coupe transversale suivant la ligne V—V de la figure 4;

la figure 6 est une vue en perspective d'un autre mode de réalisation dans lequel la partie centrale métallique de la jante est massive;

la figure 7 est une vue en coupe transversale du montage des aubes sur la jante de la figure 6;

la figure 8 est une vue en perspective d'un autre mode de réalisation dans lequel la partie centrale métallique de la jante est évidée.

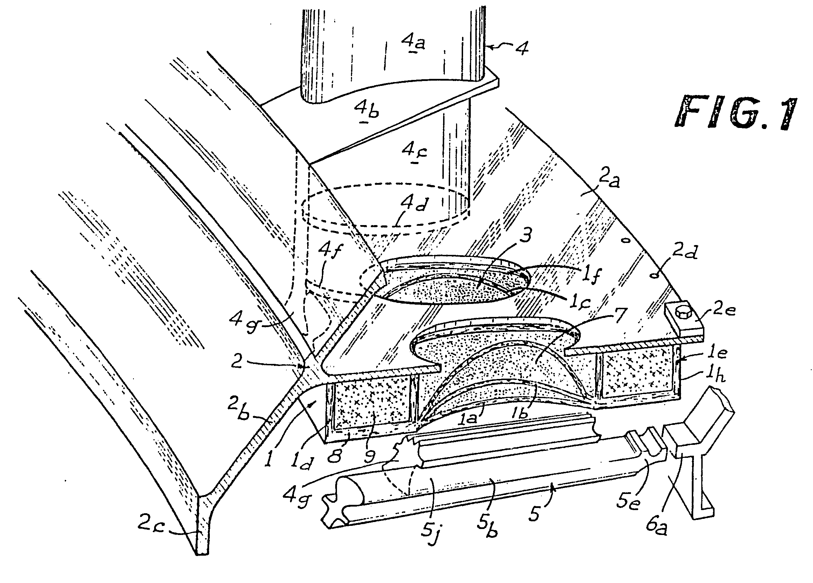

Aux figures 1, 2 et 3, on a représenté un mode de réalisation du dispositif de fixation d'aubes sur un rotor de compresseur pour turboréacteur. Dans ce mode de réalisation, le rotor comprend une jante 1 en matériau composite constituée de plusieurs peaux ou couches de fibres 1a, 1b, 1c, 1f disposées selon le procédé faisant l'objet du FR—A—2 347 858 et entre lesquelles est disposé un matériau composite de liaison 7, de façon que les couches soient sollicitées en traction par les efforts centrifuges s'exerçant sur les pales. La couche ou peau extérieure 1f constituant une âme relie deux anneaux 1d, 1e à section en U en matériau composite 8, constitué d'une matrice en matière synthétique ou métallique dans laquelle sont disposées des couches de fibres. A l'intérieur des anneaux à section en U, est disposé un matériau composite de même nature, dans lequel les fibres 9 sont bobinées.

Sur la couche de fibres 1f constituant la face

externe de la jante est fixée, notamment par collage, la partie cylindrique 2*a* d'une virole en titane 2 qui comporte une partie conique 2*b* munie d'une bride perforée 2*c* par laquelle elle est solidarisée au tambour du rotor.

Après l'opération de collage de la jante composite 1 et de la virole 2, on procède à l'usinage d'alvéoles 3 destinés à recevoir le pied des aubes 4. A l'arrière de la virole 2 sont prévus des trous 2*d*, espacés circulairement, destinés à la fixation de plaquettes d'équilibrage 2*e*.

Dans les alvéoles 3 sont engagés les pieds des aubes 4 qui comportent une pale 4*a*, une première plate-forme 4*b* reconstituant la veine intérieure, une échasse 4*c*, une deuxième plateforme 4*d* et une troisième plateforme 4*f* dont les sections correspondent à celle de l'alvéole 3 et qui assurent un calage angulaire identique à toutes les aubes.

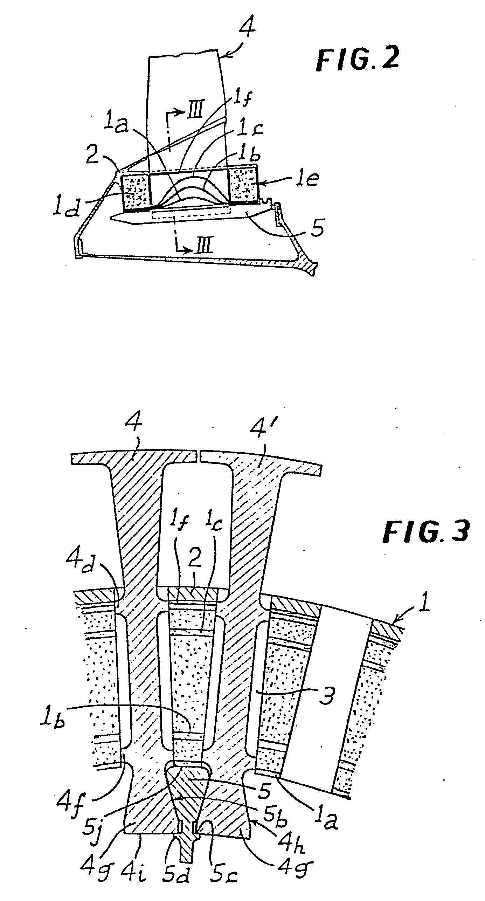

Chaque pied des aubes 4 présente une extrémité 4*g* en forme de queue d'aronde de manière à délimiter par les faces 4*h* inclinées de deux pieds d'aubes adjacentes 4, 4' (figure 3) un espace dans lequel est engagée une clavette 5 présentant une partie à section en forme de queue d'aronde dont les faces 5*b* sont en contact avec les faces 4*h* du pied d'aube. La plateforme 5*j* prévue à la partie supérieure de la clavette 5 vient en appui sur l'alésage de la jante 1 et diffuse sur toute sa surface les charges résultant des efforts centrifuges s'exerçant sur les aubes. La partie de la clavette 5 en forme de queue d'aronde est prolongée par une partie de section cruciforme dont la face 5*c* des bras 5*d* vient en butée contre la face 4*i* des pieds d'aubes 4*g* (figure 3); ce dispositif interdit le coulissement radial des aubes vers l'intérieur (action analogue à celle d'une clé de voûte) et vers l'extérieur. La clavette 5 est maintenue longitudinalement d'un côté par un talon 5*e* venant en butée contre la face 1*h* de la jante et de l'autre côté par un bossage 6*a* d'une bride 6 (figure 1) solidaire de l'arbre d'entraînement du tambour.

Le montage des aubes sur le rotor s'effectue de la manière suivante.

On procède à l'introduction de deux aubes 4 consécutives dans leurs alvéoles 3 respectives et on engage la clavette 5 par l'arrière jusqu'à ce que le talon 5*e* vienne en butée contre la face arrière 1*h* de l'anneau 1*e*. Les clavettes 5 verrouillent radialement toutes les aubes sur la jante. Lors de la rotation du rotor les plateformes, ou faces supérieures 5*j* des clavettes transmettent les efforts centrifuges sur les appuis de l'alésage du rotor, et les diffusent aux anneaux 1*d* et 1*e*.

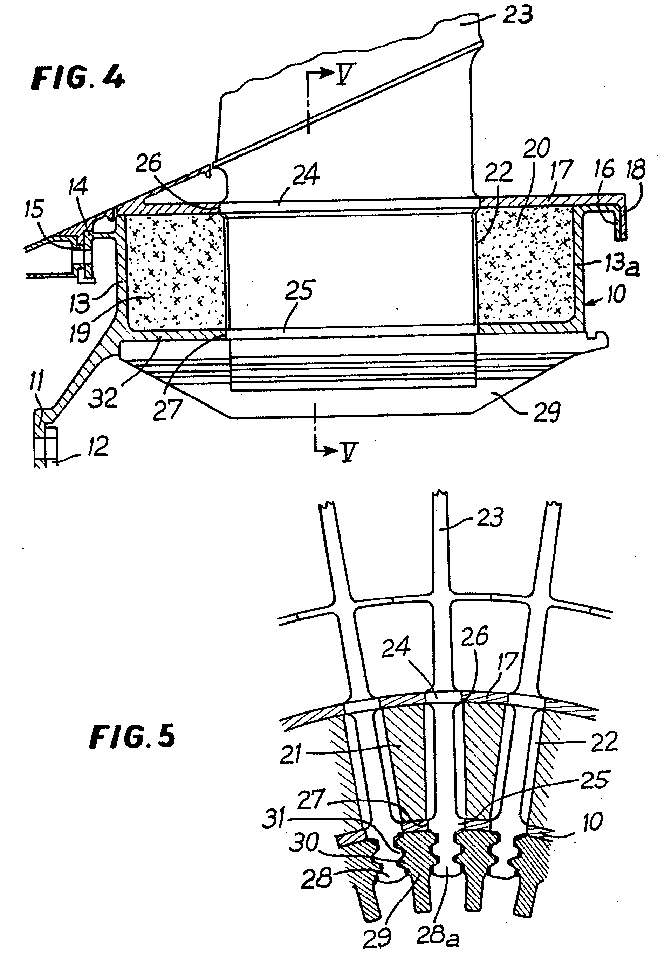

Aux figures 4 et 5, on a représenté une variante de réalisation du dispositif de fixation dans laquelle la jante du rotor est constituée d'une virole 10 métallique en U fixée par une bride 11 sur un tourillon avant 12 du compresseur. La paroi verticale avant 13 de la virole 10 comporte une bride avant 14 (figure 4) sur laquelle est fixé un capot avant 15 et la paroi verticale arrière 13*a* de la virole 10 comporte une bride arrière 16, sur laquelle est fixée une coiffe 17 fixée par une bride 18.

A l'intérieur de la virole 10 sont disposés, avant la fermeture de la coiffe 17, deux anneaux 19 et 20 en matériau composite, réalisés à partir de fibres de bore noyées dans une matrice d'aluminium, séparés par un bobinage 21 en fibres de verre et résine.

Des alvéoles 22 sont usinées simultanément dans la branche horizontale de la virole 10 dans le bobinage 21 (figure 5) et dans la coiffe cylindrique 17, de manière que les ouvertures pratiquées dans les trois éléments correspondent bien entre elles.

Comme dans l'exemple précédent, les pieds des aubes 23 (figure 5) sont engagés dans les alvéoles 22, de telle sorte que les plateformes 24 et 25 portent latéralement sur les parois radiales des ouvertures 26 et 27 prévues dans la coiffe 17 et la partie horizontale de la virole 10. Cette disposition permet une meilleure reprise par le contact métal sur métal, des efforts de torsion s'exerçant sur les aubes. Entre les pieds 28, 28*a* des deux aubes 23 adjacentes est insérée une clavette 29 à profil dit "en sapin" qui présente latéralement des dents 30 engagées dans des espaces prévus entre des dents correspondantes 31 ménagées sur les faces latérales des pieds d'aubes 28. A leur partie extérieure, les clavettes 29 sont en appui sur toute leur longueur contre les faces 32 de la virole 10, ce qui assure une meilleure tenue de l'ensemble au matage, compte tenu du contact métal contre métal.

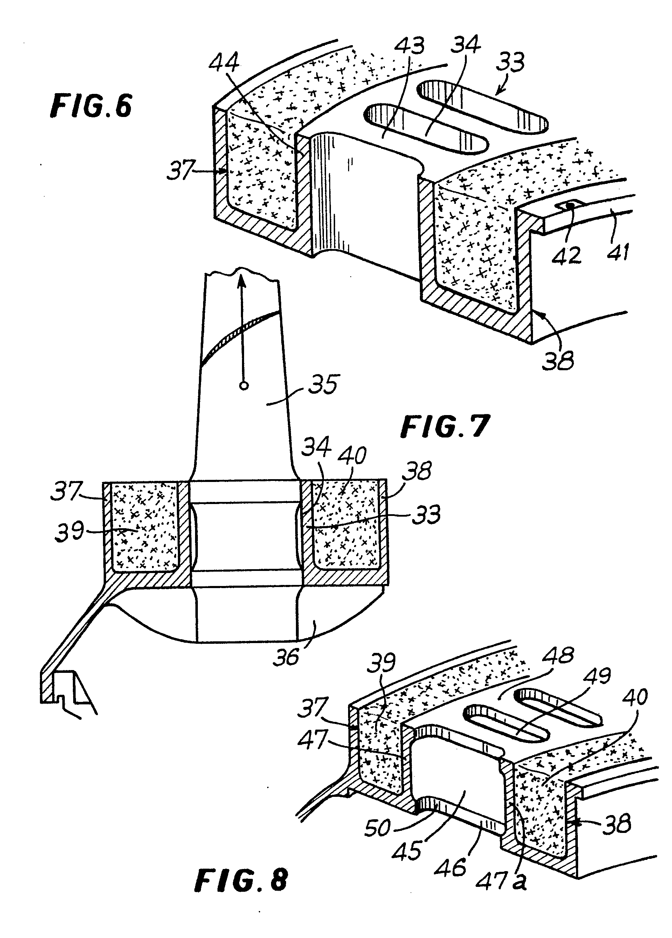

Aux figures 6 et 7, on a représenté une variante de réalisation de la jante dans laquelle sont fixées les aubes, ladite jante étant métallique et non plus constituée de matériau composite. La jante comporte une portie centrale massive 33 dans laquelle sont usinées les alvéoles 34 destinées à recevoir les pieds des aubes 35 qui sont verrouillés au moyen de clavettes 36 identiques à celles représentées aux figures 4 et 5. De part et d'autre de la partie centrale 33 sont prévues deux gorges en U 37, 38 dans lesquelles sont insérés respectivement des bobinages 39, 40 en matériau composite. A l'arrière de la jante, il est prévu une bride 41 permettant la fixation de plaquettes d'équilibrage 42.

Dans ce mode de réalisation, les pontets 43 participent à une meilleure distribution des efforts centrifuges (symbolisés par une flèche verticale sur la figure 7); en outre, les ailes internes 44 des deux gorges latérales 37, 38 absorbent les efforts de cisaillement engendrés par les aubes (pourvues de pieds 28 et de clavettes 29, conformément aux figures 4—5 planche 4).

A la figure 8, on a représenté un autre mode de réalisation d'une jante métallique de rotor pour la fixation des aubes dans lequel la partie centrale 45 est évidée dans un souci d'allège- ment et présente la forme d'une gorge en U comportant un fond 46 et deux parois latérales 47, 47a constituées par les ailes internes des deux gorges latérales 37, 38 dans lesquelles sont insérés des bobinages 39, 40 comme dans l'exemple précédent.

Sur le diamètre extérieur de la partie centrale 45 est rapporté, notamment par soudage, un anneau cylindrique 48 dans lequel sont usinées des alvéoles 49 qui correspondent aux alvéoles 50 usinées dans le fond 46 et qui sont destinées à recevoir les pieds des aubes.

Les modes de réalisation représentés aux figures 6 et 8 présentent sur ceux comportant une partie centrale en matériau composite l'avantage d'un meilleur appui des plateformes 4d et 4f des aubes sur des surfaces métalliques qui participent à la reprise des efforts affectant les aubes.

Bien entendu, diverses modifications peuvent être apportées par l'homme de l'art aux dispositifs et procédés qui viennent d'être décrits uniquement à titre d'exemples non limitatifs, sans sortir du cadre de l'invention.

## Revendications

1. Dispositif de fixation d'aubes de soufflante sur un tambour de rotor de compresseur pour turboréacteur, ledit rotor étant constitué d'une part par un tambour comportant au moins une partie annulaire réalisée en matériau composite et dans lequel sont prévues des alvéoles s'étendant radialement, d'autre part par des aubes comportant une échasse séparant radialement une plateforme reconstituant la veine et un pied, caractérisé en ce que les aubes (4, 23, 35) sont engagées par l'extérieur dans lesdites alvéoles, comportent un pied (4g, 28) massif en saillie vers l'intérieur par rapport à la face intérieure du tambour et présentant en section une forme élargie par rapport à l'échasse, et présentent, échelonnées sur la hauteur de l'échasse, une pluralité de plateformes (4d, 4f, 24, 25) en appui sur des portions de la paroi des alvéoles qui participent à la reprise des efforts affectant les aubes, lesdites aubes étant verrouillées radialement sur le tambour par une clavette (5, 29, 36) engagée dans l'espace délimité par les pieds de deux aubes adjacentes et prenant appui d'une part, radialement, contre la face intérieure du tambour et d'autre part, radialement et latéralement contre les pieds des deux aubes adjacentes.

2. Dispositif selon la revendication 1, caractérisé en ce que la partie de la clavette (5) insérée entre les pieds de deux aubes adjacentes (4, 4') présente en section une forme de queue d'aronde, dont la face supérieure (5j) est en appui contre la face intérieure du tambour, ladite partie de clavette en forme de queue d'aronde étant prolongée par une partie de section cruciforme dont les bras (5d) sont en butée contre la face d'extrémité (4i) des pieds d'aubes (4q).

3. Dispositif selon la revendication 2 dans lequel des moyens de retenue en translation de la clavette comportent un talon prenant appui sur la jante, caractérisé en ce que lesdits moyens de retenue en translation sont constitués d'un côté par un talon (5e) en butée contre une face d'extrémité (1h) de la jante et de l'autre côté par un appui du talon (5e) sur une bride (6a) solidaire de l'arbre d'entraînement du tambour.

4. Dispositif selon la revendication 1, caractérisé en ce que la clavette (29) disposée entre les pieds (28, 28a) de deux aubes adjacentes (23) présente sur ses deux faces latérales des dents (30) qui sont engagées dans des espaces prévus entre des dents (31) correspondantes ménagées sur les faces en regard des pieds d'aubes (28), la face supérieure de la clavette étant en appui contre la face intérieure du tambour (10).

5. Dispositif selon la revendication 1, caractérisé en ce que la jante du rotor est métallique et comporte une partie centrale (45) évidée délimitée par deux parois circulaires (47, 47a) reliées aux parois de deux gorges latérales (37, 38) en U renfermant chacune un bobinage (39, 40) en matériau composite, les parois (46, 48) de la partie centrale étant usinées pour présenter des alvéoles (49, 50) sur les parois desquelles prennent appui les plateformes (4d, 4f).

## Patentansprüche

1. Vorrichtung zur Befestigung von Gebläseschaufeln auf einer Trommel eines Kompressorrotors für ein TL-Triebwerk, welcher Rotor gebildet wird einerseits durch eine Trommel, die mindestens einen ringförmigen Teil aufweist, der aus einem Verbundwerkstoff hergestellt ist und in welchem sich radial erstreckende Aushöhlungen vorgesehen sind, andererseits durch Schaufeln, die einen Schaft aufweisen, der eine die Ader bildende Plattform radial trennt, dadurch gekennzeichnet, daß die Schaufeln (4, 23, 35), die von außen in die Aushöhlungen eingesetzt sind, einen massiven Fuß (4g, 28) besitzen, der nach innen mit Bezug auf die Innenfläche der Trommel übersteht und im Schnitt eine mit Bezug auf den Schaft erweiterte Form aufweist und besitzt, gestaffelt über die Höhe, eine Anzahl Plattformen (4d, 4f, 24, 25), die sich gegen Teile der Wand der Aushöhlungen abstützen, welche an der Aufnahme der auf die Schaufeln wirkenden Kräfte teilnehmen, wobei die Schaufeln auf der Trommel durch einen Keil (5, 29, 36) radial verriegelt sind, der in den Raum eingesetzt ist, welcher durch die Füße von zwei benachbarten Schaufeln begrenzt wird, und der sich einerseits radial gegen die Innenfläche der Trommel abstützt und andererseits radial und seitlich gegen die Füße der beiden benachbarten Schaufeln.

2. Vorrichtung nach Anspruch 1, dadurch gekennzeichnet, daß der Teil des Keils (5), der zwischen die Füße von zwei benachbarten Schaufeln (4, 4') eingesetzt ist, einen Querschnitt in Form einer Zinke aufweist, dessen obere Fläche (5j) sich gegen die Innenfläche der Trommel abstützt, welcher zinkenförmige Teil des Keils durch einen Teil von kreuzförmigem Querschnitt verlängert ist, dessen Arme (5d) gegen die Endfläche (4i) der Schaufelfüße (4q) anliegen.

3. Vorrichtung nach Anspruch 2, bei welcher die Verlagerungshaltemittel des Keils eine Nase aufweisen, die sich gegen die Felge abstützt, dadurch gekennzeichnet, daß die Verlagerungshaltemittel gebildet werden einerseits durch eine Nase (5e) in Anlage gegen eine Endfläche (1h) der Felge und andererseits durch eine Anlage der Nase (5e) an einem Flansch (6a), die an der Trommelantriebswelle ausgebildet ist.

4. Vorrichtung nach Anspruch 1, dadurch gekennzeichnet, daß der Keil (29) zwischen den Füßen (28, 28a) von zwei benachbarten Schaufeln (23) angeordnet ist, auf seinen beiden seitlichen Flächen Zähne (30) aufweist, die sich in Eingriff befinden mit den Lücken, die zwischen den entsprechenden Zähnen (31) vorgesehen sind, die an den einander gegenüberliegenden Flächen der Schaufelfüße (28) ausgebildet sind, wobei sich die Oberseite des Keils gegen die Innenfläche der Trommel (10) in Anlage befindet.

5. Vorrichtung nach Anspruch 1, dadurch gekennzeichnet, daß die Felge des Rotors metallisch ist und einen ausgesparten Mittelteil (45) aufweist, der durch zwei kreisförmige Wände (47, 47a) begrenzt wird, die mit den Wänden von zwei seitlichen U-förmigen Nuten (37, 38) verbunden sind, von denen jede eine Füllung (39, 40) aus Verbundwerkstoff umschließt, wobei die Wände (46, 48) des Mittelteils so bearbeitet sind, daß sie Aussparungen (49, 50) aufweisen, gegen deren Wände sich die Plattformen (4d, 4f) abstützen.

## Claims

1. Device for fixing blades to the rotor of the compressor of a turbojet plant, the said rotor being constituted on the one hand by a drum comprising at least one annular part made of a composite material and in which are provided apertures extending radially, on the other hand by blades comprising a stem radially separating a platform interconnecting the aerofoil portion and a root, characterised in this that the blades (4, 23, 35) are externally engaged in the said apertures, comprise a large root (4g, 28) extending inwardly with respect to the inner face of the drum and having in section an enlarged shape with respect to the stem, and having, spaced over the height of the stem, a plurality of platforms (4d, 4f, 24, 25) in abutment against portions of the wall of the apertures which participate in the resistance to forces affecting the blades, the said blades being locked radially to the drum by a key (5, 29, 36) engaged in space defined by the roots of two adjacent blades and abutting on the one hand, radially against the inner face of the drum and on the other hand, radially and laterally against the roots of two adjacent blades.

2. Device according to claim 1, characterised in this that the part of the key (5) inserted between the roots of two adjacent blades (4, 4') has a swallow-tail section of which the upper face (5j) abuts against the inner face of the drum, the said swallow part of the key being extended by a part of cruciform section of which the arms (5d) abut against the end face (4i) of the blade roots (4q).

3. Device according to claim 2 in which retention means operative against lateral motion of the key comprise a heel abutting the rim, characterised in this that the said retention means against lateral motion are constituted on the one side by a heel (5e) abutting an end face (1h) of the rim and on the other side by abutment against a heel (5e) on a flange (6a) rigid with the drive shaft of the drum.

4. Device according to claim 1, characterised in this that the key (29) disposed between the roots (28, 28a) of two adjacent blades (23) has, on its two lateral faces, teeth (30) which are engaged in spaces provided between the corresponding teeth (31) provided on the opposed faces of the roots of the blades (28), the upper face of the key abutting against the inner face of the drum (10).

5. Device according to claim 1, characterised in this that the rim of the rotor is of metal and comprises a central hollow part (45) defined by two circular walls (47, 47a) connected to the walls of two lateral channels (37, 38) of U-shape each enclosing a winding (39, 40) of composite material, the walls (46, 48) of the central part being machined to provide apertures (49, 50) against the walls of which the platforms (4d, 4f) abut.

FIG.1

0017567

FIG.2

FIG.3

**FIG. 4**

**FIG. 5**

**FIG.6**

**FIG.7**

**FIG.8**